# EUROPÄISCHE PATENTSCHRIFT

(11) **EP 1 361 096 B1**
(45) Veröffentlichungstag und Bekanntmachung des Hinweises auf die Patenterteilung: **09.04.2008**
(21) Anmeldenummer: 03009067.4
(22) Anmeldetag: 17.04.2003
(51) Int. Cl.: B60J 10/00, B60R 13/04, E05F 15/00, F16P 3/12, H03K 17/955, H03K 17/975

(54) **Vorrichtung zum Erkennen eines Hindernisses in dem Öffnungsbereich eines bewegbaren Schliesselements eines Fahrzeugs**
Device for detecting an obstacle in the opening area of a movable closure element of a vehicle
Dispositif pour la détection d'un obstacle dans la zône d'ouverture d'un élément mobile de fermeture d'un véhicule

(30) Priorität: 06.05.2002 DE 10220187
(43) Veröffentlichungstag der Anmeldung: 12.11.2003
(73) Patentinhaber: Metzeler Automotive Profile Systems GmbH, 88131 Lindau/Bodensee (DE)
(72) Erfinder: Nuber, Roland, 88131 Lindau (DE)
(74) Vertreter: Schober, Christoph D.

(56) Entgegenhaltungen:
- EP-A- 0 648 628
- EP-A- 0 829 385
- GB-A- 2 282 848
- US-A- 3 830 018
- US-A- 5 621 290

## Beschreibung

Die Erfindung betrifft eine Vorrichtung zum Erkennen eines Hindernisses in dem Öffnungsbereich eines zwischen einer Offenstellung und einer Schließstellung bewegbaren Schließelements eines Kraftfahrzeugs, insbesondere einer elektrisch angetriebenen Fensterscheibe oder eines Schiebedachs. Die Vorrichtung ist mit einem das Schließelement abdichtenden Dichtungsprofil versehen, das aus einem elastischen Werkstoff gefertigt und an einem Rahmen des Kraftfahrzeugs befestigt ist. Darüber hinaus ist die Vorrichtung mit einem ein Hindernis in dem Öffnungsbereich des Schließelements erfassenden Sensor versehen, der wenigstens einen ein elektrisches Feld in dem Öffnungsbereich des Schließelements erzeugenden elektrischen Leiter aufweist.

Eine derartige Vorrichtung stellt einen Einklemmschutz dar, der dazu dient, das Einklemmen etwa eines menschlichen Körperteils zwischen dem Schließelement und einer das Schließelement zumindest teilweise umgebenden Kante zu verhindern. Zu diesem Zweck weisen die bekannten Vorrichtungen einen Sensor auf, der die Anwesenheit eines Hindernisses in dem Öffnungsbereich des Schließelements erfaßt und ein Steuersignal für einen das Schließelement bewegenden Antrieb bereitstellt. In Abhängigkeit von der Funktionsweise des Sensors lassen sich die bekannten Vorrichtungen unterteilen in einen Einklemmschutz, der einen physischen Kontakt des Hindernisses erfordert, und einen Einklemmschutz, der berührungslos arbeitet.

Ein zu der ersten Gruppe zu zählender Einklemmschutz wird beispielsweise in der DE 199 13 105 A1 beschrieben. Die bekannte Vorrichtung weist ein Dichtungsprofil auf, das ein Schließelement abdichtet und mit zwei voneinander beabstandeten, elektrisch leitfähigen Bereichen versehen ist. Bei einem physischen Kontakt mit einem in dem Öffnungsbereich des Schließelements befindlichen Hindernis werden die leitfähigen Bereiche aneinander gedrückt, wodurch sich ein Schaltkontakt ergibt, der ein elektrisches Steuersignal auslöst.

Ein berührungslos arbeitender Einklemmschutz ist aus der EP 1 154 110 A2 bekannt. Die Wirkungsweise dieser Vorrichtung beruht auf einer durch ein Hindernis in dem öffnungsbereich eines Schließelements hervorgerufenen kapazitiven Änderung eines zwischen zwei elektrischen Leitern erzeugten elektrischen Felds. Einer der Leiter, die Sensorelektrode, ist in einem das Schließelement abdichtenden Dichtungsprofil integriert, wohingegen der andere Leiter, die Grundelektrode, beispielsweise durch einen Rahmen eines Kraftfahrzeugs gebildet wird, an dem das Dichtungsprofil befestigt ist. Um auch nicht leitende Werkstoffe, wie beispielsweise Holz oder Kunststoff, die keine oder nur eine geringe kapazitive Änderung des elektrischen Felds hervorrufen, erkennen zu können, ist der die Sensorelektrode aufnehmende Bereich des Dichtungsprofils verformbar. Auf diese Weise ist sichergestellt, daß zumindest durch einen physischen Kontakt eines Hindernisses mit dem Dichtungsprofil eine Veränderung der Lage der Sensorelektrode eintritt, die eine kapazitive Änderung bewirkt.

Die bekannten Vorrichtungen sind mit dem Nachteil verbunden, daß ein zum Erfassen eines Hindernisses erforderlicher elektrischer Leiter mit einem das Schließelement abdichtenden Dichtungsprofil verbunden ist. Der Leiter ist dabei beispielsweise als leitfähiger Bereich des Dichtungsprofils ausgestaltet oder ein Draht, der durch Koextrusion in das Dichtungsprofil integriert wird. Dies hat zur Folge, daß die Fertigungskosten des Dichtungsprofils vergleichsweise hoch sind. Darüber hinaus hat sich die Integration des elektrischen Leiters in das Dichtungsprofil als nachteilig bei der Montage herausgestellt. Vor allem in gekrümmten Bereichen, wie etwa beim Übergang von der A-Säule zu dem Dach eines Kraftfahrzeugs, wird das Dichtungsprofil gestaucht, so daß die Gefahr einer Beschädigung des elektrischen Leiters besteht.

Außerdem erfordert die Integration des elektrischen Leiters in das Dichtungsprofil einen vergleichsweise hohen logistischen Aufwand hinsichtlich der übrigen Bauteile des Sensors, die in der Regel zusammen mit dem Dichtungsprofil konfektioniert werden. Nicht zuletzt erschwert die Integration des elektrischen Leiters in das Dichtungsprofil die Fehlersuche bei einem Ausfall des Einklemmschutzes.

Ein kapazitiver Einklemmschutz, der einen als Sensorelektrode dienenden elektrischen Leiter aufweist, ist ferner aus der GB 2 282 848 A bekannt. Der elektrische Leiter kann an einer Verkleidung angeordnet sein, die einen Fensterrahmen verdeckt und getrennt von einer als Fensterführungsprofil ausgebildeten Dichtung gefertigt ist. Der mit einem Oszillator verbundene elektrische Leiter ist entweder stoffschlüssig mit der Verkleidung verbunden oder als in der Verkleidung enthaltener metallischer Kern ausgestaltet.

Der Erfindung liegt die **Aufgabe** zugrunde, eine Vorrichtung der eingangs genannten Art dahingehend weiterzubilden, daß sich im Vergleich zum Stand der Technik geringere Fertigungskosten sowie eine einfachere Montage und Wartung erzielen lassen.

Diese Aufgabe wird durch eine Vorrichtung mit den Merkmalen gemäß Anspruch 1 gelöst. Bevorzugte Ausgestaltungen der erfindungsgemäßen Vorrichtung werden in den Ansprüchen 2 bis 10 definiert.

Die erfindungsgemäße Vorrichtung beruht auf der Erkenntnis, das Dichtungsprofil und den zum Erfassen eines Hindernisses in dem Öffnungsbereich des Schließelements erforderlichen elektrischen Leiter als separate Bauteile auszubilden. Eine solche Ausgestaltung ermöglicht zum einen geringere Fertigungskosten des Dichtungsprofils und trägt zum anderen zu einer praxisgerechten Montage und Wartung bei. Grund hierfür ist in erster Linie die funktionelle Entkopplung von Dichtungsprofil und elektrischem Leiter. Der Leiter ist an einer Verkleidung angeordnet, die den Rahmen und/oder das Dichtungsprofil zumindest teilweise verdeckt. Die erfindungsgemäße Vorrichtung macht sich dabei zunutze, daß eine derartige Verkleidung, beispielsweise in Form einer Zierleiste, bei den meisten herkömmlichen Schließelementen, wie etwa eine Fensterscheibe, aus ästhetischen Gründen ohnehin vorhanden ist. Ein zusätzlicher Fertigungs- und Montageaufwand fällt insofern nicht an.

Weiterhin reduziert die erfindungsgemäße Vorrichtung den logistischen Aufwand, da sämtliche den Sensor betreffende Bauteile als Zukaufsteile separat gefertigt und geliefert werden können. Schließlich gewährleistet die erfindungsgemäße Ausgestaltung die Anbringung des elektrischen Leiters an einer für die Erfassung eines Hindernisses in dem Öffnungsbereich eines Schließelements günstigen Stelle, ohne die Anordnung des Dichtungsprofils zu beeinflussen. Damit lassen sich den besonderen Anforderungen bestimmter Schließelemente, wie etwa Seitentüren, Heckklappe oder Kofferraumdeckel eines Kraftfahrzeugs, die durch einen verhältnismäßig großen Abstand zwischen Dichtungsprofil und potentieller Einklemmzone gekennzeichnet sind, Rechnung tragen.

In Hinsicht auf eine wirksame Ausbildung eines elektrischen Felds durch den elektrischen Leiter ist die Verkleidung zur elektrischen Isolierung des Leiters aus einem dielektrischen Werkstoff, vorzugsweise Kunststoff, gefertigt. Unter einem dielektrischen Werkstoff im voranstehenden Sinne wird ein isolierendes Material verstanden, welches die Ausbreitung des elektrischen Felds ohne signifikante Erhöhung der Kapazität gewährleistet.

Von besonderem Vorteil ist es, den Leiter in einer aus einem elastischen, dielektrischen Werkstoff gefertigten Ummantelung einzubetten. Die den elektrischen Leiter vor Umgebungseinflüssen schützende Ummantelung kann aus einem isolierenden Gummi, beispielsweise Moosgummi, bestehen, so daß sich der Leiter durch Koextrusion auf in wirtschaftlicher Hinsicht günstige Weise in der Ummantelung einbetten läßt. Eine solche Ausgestaltung ermöglicht es zudem, die Verkleidung aus Metall, beispielsweise Aluminium, zu fertigen.

Vorteilhafterweise ist der Leiter als Litze oder flaches Band ausgestaltet, um eine praxisgerechte Fertigung zu gewährleisten. In Hinsicht auf eine einfache Montage ist es außerdem vorteilhaft, den Leiter stoffschlüssig und/oder formschlüssig und/oder kraftschlüssig an der Verkleidung zu befestigen. Vor allem eine zu etwa einem Formschluß oder einem Kraftschluß hinzutretende stoffschlüssige Verbindung, beispielsweise durch Kleben, ermöglicht eine zuverlässige und dauerhafte Befestigung des Leiters.

Eine formschlüssige und bei Bedarf auch kraftschlüssige Befestigung des Leiters an der Verkleidung läßt sich in vorteilhafter Ausgestaltung der erfindungsgemäßen Vorrichtung dadurch realisieren, daß der Leiter zwischen wenigstens zwei an der Verkleidung ausgebildeten Stegen festgelegt ist. Zu Zwecken einer einfachen und schnellen Montage kann der Leiter alternativ auch durch einen an der Verkleidung ausgebildeten Vorsprung eingeklemmt werden.

In einer bevorzugten Ausgestaltung der erfindungsgemäßen Vorrichtung kann der Leiter auch in einem an der Verkleidung ausgebildeten Spalt festgelegt sein. In diesem Fall hat es sich als zweckmäßig erwiesen, wenn die Verkleidung zumindest im Bereich des Spalts elastisch verformbar ist.

Denn auf diese Weise kann der Spalt zum einfachen Einlegen des Leiters aufgebogen werden. Dies ermöglicht zudem, den Spalt in Form einer Hinterschneidung auszugestalten, so daß der in den Spalt eingelegte Leiter formschlüssig und gegebenenfalls auch kraftschlüssig gehalten wird.

Bevorzugt ist die Verkleidung formschlüssig mit dem Dichtungsprofil verbunden, um eine zuverlässige Befestigung der Verkleidung an dem Kraftfahrzeug zu erreichen.

Schließlich wird in bevorzugter Weiterbildung der erfindungsgemäßen Vorrichtung vorgeschlagen, die Verkleidung als sich entlang des Dichtungsprofils erstreckende Zierleiste auszugestalten, um einen in ästhetischer Hinsicht ansprechenden optischen Eindruck zu vermitteln.

Einzelheiten und weitere Vorteile der erfindungsgemäßen Vorrichtung ergeben sich aus der nachfolgenden Beschreibung bevorzugter Ausführungsbeispiele. In der die Ausführungsbeispiele lediglich schematisch darstellenden Zeichnungen veranschaulichen im einzelnen:
- Fig. 1: eine Seitenansicht eines Kraftfahrzeugs;
- Fig. 2: einen Schnitt entlang der Schnittlinie II in Fig. 1;
- Fig. 3a: eine Darstellung des in Fig. 2 mit III gekennzeichneten Bereichs bei einer nicht erfindungsgemäßen Ausführungsform;
- Fig. 3b: eine Darstellung einer ersten Ausführungsform der vorliegenden Erfindung;
- Fig. 3c: eine Darstellung einer zweiten Ausführungsform der vorliegenden Erfindung;
- Fig. 3d: eine Darstellung einer dritten Ausführungsform der vorliegenden Erfindung;
- Fig. 4a: einen Schnitt entlang der Schnittlinie II in Fig. 1 bei einer vierten Ausführungsform der vorliegenden Erfindung;
- Fig. 4b: eine Darstellung gemäß Fig. 4a, die ein gedehntes Dichtungsprofil zeigt;
- Fig. 5a: einen Querschnitt durch eine Verkleidung im aufgeklappten Zustand;
- Fig. 5b: einen Querschnitt durch die Verkleidung gemäß Fig. 5a im geschlossenen Zustand;
- Fig. 5c: eine Darstellung gemäß Fig. 5b, welche die Befestigung der Verkleidung an einem Rahmen zeigt und
- Fig. 6: einen Schnitt entlang der Schnittlinie II in Fig. 1. bei einer fünften Ausführungsform der vorliegenden Erfindung.

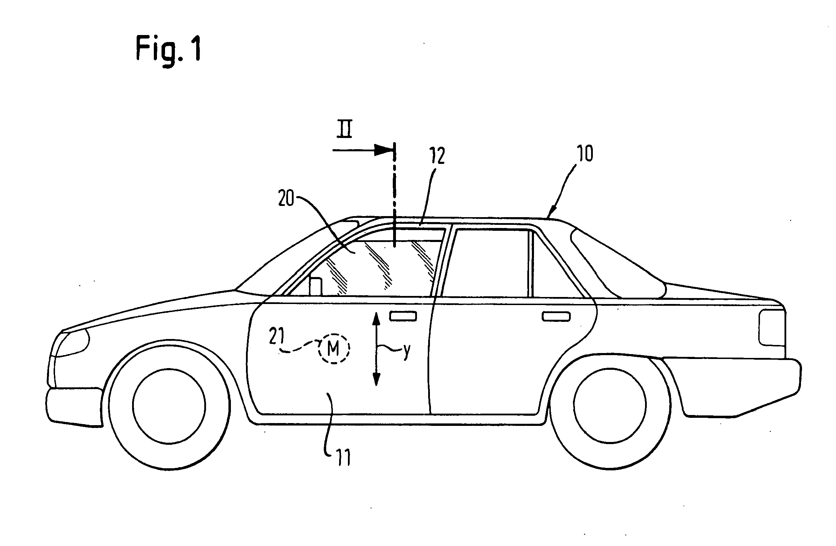

In Fig. 1 ist ein Kraftfahrzeug 10 dargestellt, das im Bereich einer Vordertür 11 mit einer durch einen Elektromotor 21 angetriebenen Fensterscheibe 20 versehen ist. Die ein Schließelement darstellende Fensterscheibe 20 ist in Antriebsrichtung y des Elektromotors 21 zwischen einer Offenstellung und ihrer Schließstellung bewegbar.

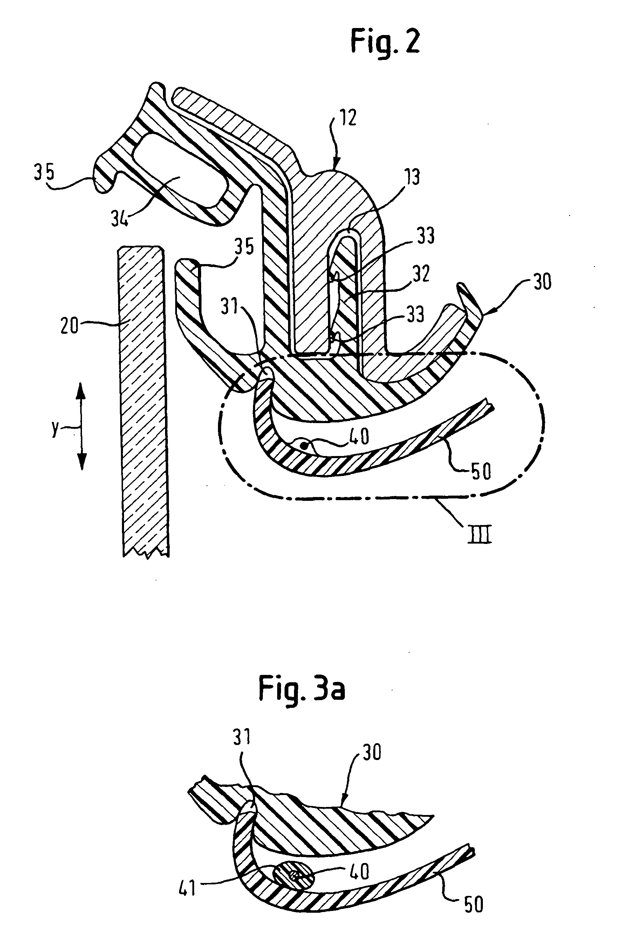

Wie Fig. 2 näher erkennen läßt, weist die Vordertür 11 einen Rahmen 12 auf, an dem ein die Fensterscheibe 20 abdichtendes Dichtungsprofil 30 befestigt ist. Das aus einem elektrisch nicht leitenden elastomeren Werkstoff gefertigte Dichtungsprofil 30 ist mit einem Befestigungsabschnitt 32 versehen, der sich in einem Kanal 13 des Rahmens 12 erstreckt und zum Festlegen des Dichtungsprofils 30 Haltelippen 33 aufweist. Das Dichtungsprofil 30 ist zudem mit einer Hohlkammer 34 und Dichtlippen 35 versehen, welche die Fensterscheibe 20 führen und abdichten. Weiterhin weist das Dichtungsprofil 30 eine Ausnehmung 31 auf, in die eine Zierleiste 50 formschlüssig eingreift. Die Zierleiste 50 dient dazu, das Dichtungsprofil 30 und den Rahmen 12 zumindest teilweise zu kaschieren, um einen für den Betrachter in ästhetischer Hinsicht ansprechenden optischen Eindruck zu erwecken. Die aus Kunststoff gefertigte und stationär angeordnete Zierleiste 50 ist mit einem elektrischen Leiter 40 versehen. Der elektrische Leiter 40 stellt eine Sensorelektrode dar, wie sie in der EP 1 154 110 A2 beschrieben ist, und dient dazu, ein elektrisches Feld zu erzeugen. Der geerdete Rahmen 12 stellt dabei eine das elektrische Feld aufrechterhaltende Gegenelektrode dar. Mittels einer nicht gezeigten Auswerteeinheit ist es somit möglich, eine durch ein Hindernis in dem Öffnungsbereich der Fensterscheibe 20 hervorgerufene kapazitive Änderung des elektrischen Felds zu erfassen, um ein Steuersignal für den Elektromotor 21 bereitzustellen, das im Bedarfsfall den Elektromotor 21 stoppt. Je nach Anwendungsfall kann die Zierleiste 50 nachgiebig ausgestaltet sein, so daß bei einem physischen Kontakt mit einem Hindernis eine Verformung der Zierleiste 50 auftritt, die eine als Steuersignal auswertbare kapazitive Änderung des elektrischen Felds bewirkt. Um eine ausreichende Verformungsfähigkeit sicherzustellen, ist die Zierleiste 50 zumindest im Bereich des elektrischen Leiters 40 von dem Dichtungsprofil 30 beabstandet. Auf diese Weise bildet die Zierleiste 50 im Bereich des Leiters 40 einen sogenannten Softspot aus.

In den Fign. 3a bis 3d sind alternative Ausführungsformen der Ausgestaltung und der Anordnung des elektrischen Leiters 40 dargestellt. Gemeinsam ist allen Ausführungsformen, daß der elektrische Leiter 40 auf der dem Dichtungsprofil 30 zugewandten Seite der Zierleiste 50 angeordnet und damit für einen Betrachter von außen nicht zu erkennen ist. Das optische Erscheinungsbild der Zierleiste 50 wird durch den elektrischen Leiter 40 somit nicht beeinträchtigt.

Bei der in Fig. 3a gezeigten Ausführungsform ist der elektrische Leiter als Litze 40 ausgestaltet, die von einer schützenden Ummantelung 41 umgeben ist. Die Ummantelung 41 besteht aus einem elastomeren, nicht leitenden Material, beispielsweise Moosgummi, und ist mittels Koextrusion gefertigt. Die Ummantelung 41 ist durch Kleben stoffschlüssig an der Zierleiste 50 befestigt.

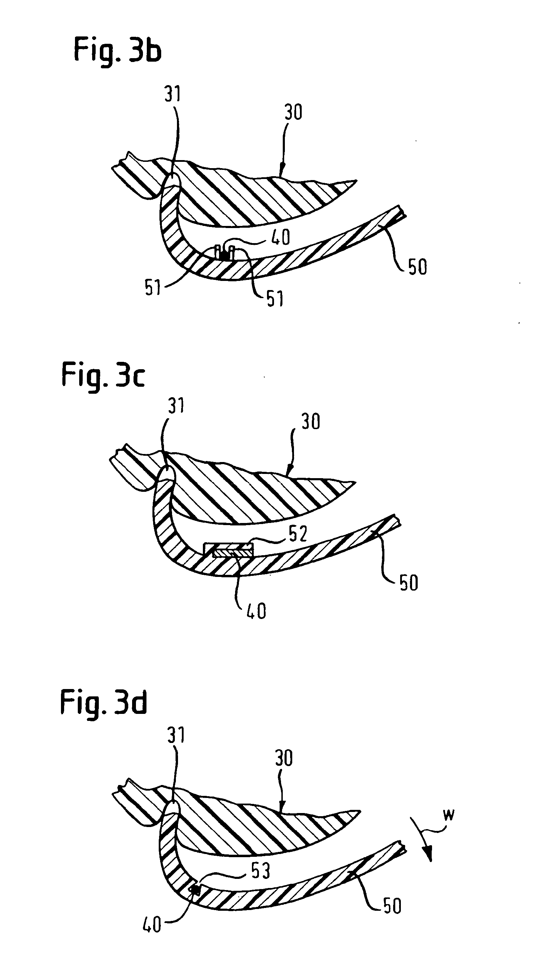

Bei der in Fig. 3b gezeigten Ausführungsform ist der elektrische Leiter 40 gleichfalls als dünner Draht oder Litze ausgestaltet. Im Unterschied zu der in Fig. 2 gezeigten Ausführungsform ist der elektrische Leiter 40 nicht durch beispielsweise Spritzgießen in die Zierleiste 50 integriert, sondern zwischen zwei an der Verkleidung 50 ausgebildeten Stegen 51 festgelegt. Die Stege 51 können dabei einen kontinuierlichen Kanal oder voneinander separierte Pfosten ausbilden. Das Vorsehen der Stege 51 ermöglicht eine in logistischer Hinsicht günstige getrennte Bereitstellung von Zierleiste 50 und elektrischen Leiter 40, wobei eine einfache und schnelle Montage sichergestellt ist.

Die in Fig. 3c gezeigte Ausführungsform weist einen als flaches Band ausgebildeten elektrischen Leiter 40 auf, der durch einen an der Zierleiste 50 ausgebildeten Vorsprung 52 eingeklemmt ist. Auch in diesem Fall können der elektrische Leiter 40 und die Zierleiste 50 getrennt bereitgestellt und auf einfache und schnelle Weise miteinander verbunden werden.

Die Zierleiste 50 bei der in Fig. 3d gezeigten Ausführungsform weist einen Spalt 53 auf, in dem der elektrische Leiter 40 festgelegt ist. Der Spalt 53 ist in Form einer Hinterschneidung ausgestaltet, die ein Ausbrechen des elektrischen Leiters 40 formschlüssig verhindert. Um den elektrischen Leiter 40 in den Spalt 53 einzuführen, ist es erforderlich, die Zierleiste 50 in der in Fig. 3d eingezeichneten Biegerichtung w zu verformen, wodurch der Spalt 53 aufgebogen wird. In Abhängigkeit von der Dimensionierung des Spalts 53 ist es auf diese Weise zudem möglich, den elektrischen Leiter 40 kraftschlüssig in dem Spalt 53 einzuklemmen.

Die zuvor beschriebenen Ausführungsformen einer Vorrichtung zum Erkennen eines Hindernisses in dem Öffnungsbereich der Fensterscheibe 20 zeichnen sich im Vergleich zu einem konventionellen Einklemmschutz durch vergleichsweise geringe Fertigungskosten sowie eine verhältnismäßig einfache Montage und Wartung aus. Grund hierfür ist vornehmlich, daß der elektrische Leiter 40 an der den Rahmen 12 und das Dichtungsprofil 30 zumindest teilweise kaschierenden Zierleiste 50 angeordnet ist. Auf diese Weise ergibt sich sowohl für die Fertigung als auch für die Montage respektive Wartung eine funktionelle Entkopplung von Dichtungsprofil 30 und das Erkennen eines Hindernisses in dem Öffnungsbereich der Fensterscheibe 20 ermöglichenden elektrischen Leiter 40. Diese Entkopplung reduziert nicht nur den Fertigungsaufwand sondern trägt auch dazu bei, daß der elektrische Leiter 40 an einer für das Erkennen eines Hindernisses günstigen Stelle angeordnet werden kann. Denn im Unterschied zum Dichtungsprofil 30, das in der Regel neben einer zuverlässigen Abdichtung auch eine Führung der Fensterscheibe 20 übernimmt, besteht für die Anordnung der Zierleiste 50, die hauptsächlich ästhetischen Anforderungen unterworfen ist, eine höhere Variabilität.

Die Anordnung des elektrischen Leiters 40 an der Zierleiste 50 hat zudem den Vorteil, daß das Dichtungsprofil 30 in bezug auf Form und Material unabhängig von dem elektrischen Leiter 40 gestaltet werden kann. Überdies unterliegt der elektrische Leiter 40 auf Grund der stationären Anordnung der Zierleiste 50 keinen oder allenfalls geringen dynamischen Belastungen, wodurch ein verschleißarmer und damit langlebiger Einklemmschutz sichergestellt ist. Nicht zuletzt läßt sich die Nachgiebigkeit der Zierleiste 50 durch eine geeignete Werkstoffwahl und Dimensionierung auf den jeweiligen Anwendungsfall abstimmen. Somit kann einem bei Bedarf erforderlichen Softspot im oben genannten Sinne gezielt Rechnung getragen werden.

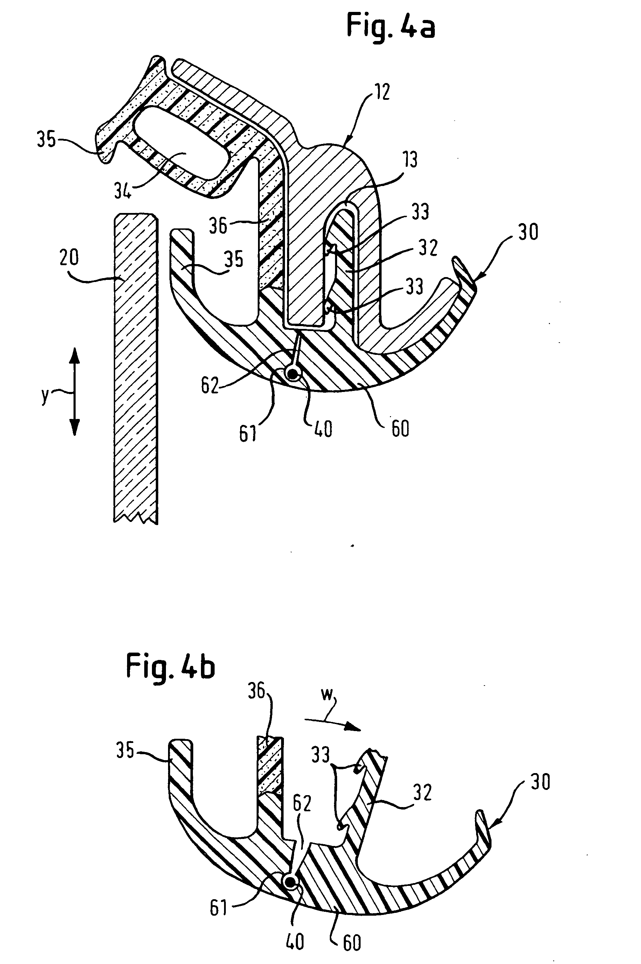

In den Fign. 4a und 4b ist eine weitere Ausführungsform der Anordnung des elektrischen Leiters 40 dargestellt. Der elektrische Leiter 40 ist in einer Ausnehmung 61 einer aus einem elastischen Werkstoff bestehenden Verkleidung 60 angeordnet. Die Verkleidung 60 kann beispielsweise durch Koextrusion mit dem Dichtungsprofil 30 gefertigt werden und im Unterschied zu einem elektrisch leitenden Abschnitt 36 des Dichtungsprofils 30 aus einem nicht leitenden Gummi bestehen. Die Ausnehmung 61 ist mit einem Spalt 62 verbunden, der sich durch das Dichtungsprofil 30 hindurch erstreckt und auf der dem Rahmen 12 zugewandten Seite des Dichtungsprofils 30 mündet. Wie in Fig. 4b näher zu erkennen ist, läßt sich der Leiter 40 in die Ausnehmung 61 auf einfache Weise einführen, indem das Dichtungsprofil 30 in nicht montiertem Zustand in Biegerichtung w gedehnt und der Spalt 62 auf diese Weise ausgeweitet wird. In montiertem Zustand des Dichtungsprofils 30 ist der Spalt 62 geschlossen und der elektrische Leiter 40 damit formschlüssig in der Ausnehmung 61 gehalten, wie aus Fig. 4a ersichtlich ist.

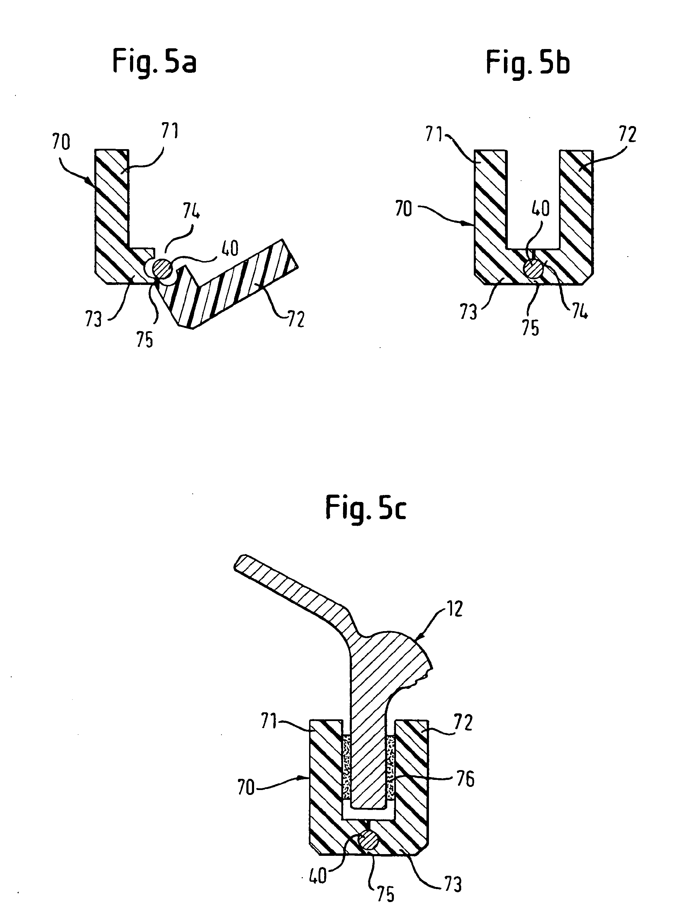

Eine ähnliche Befestigung des elektrischen Leiters 40 zeigt die Ausgestaltung gemäß den Fign. 5a bis 5c. Eine im Querschnitt U-förmige Verkleidung 70 weist Schenkel 71, 72 und eine Basis 73 auf. In der Basis 73 der beispielsweise aus Kunststoff gefertigten Verkleidung 70 ist eine Ausnehmung 74 vorgesehen, in welcher der elektrische Leiter 40 angeordnet ist. Zwischen der Außenseite der Basis 73 und der Ausnehmung 74 befindet sich ein verhältnismäßig dünner Steg 75, der in Art eines Filmscharniers ein Schwenken des Schenkels 72 bezüglich des Schenkels 71 ermöglicht. Wie in Fig. 5a zu erkennen ist, läßt sich der elektrische Leiter 40 bei aufgeklapptem Schenkel 72 mühelos in die Ausnehmung 74 einführen. In geschlossenem Zustand wird der elektrische Leiter 40 formschlüssig in der Ausnehmung 74 gehalten, wie in Fig. 5 gezeigt ist. Ein Aufklappen der Schenkel 71, 72 wird in montiertem Zustand der Verkleidung 70 durch Klebemittel 76 verhindert, welche die Innenflächen der Schenkel 71, 72 mit gegenüberliegenden Flächen des Rahmens 12 verbinden, wie sich Fig. 5c entnehmen läßt.

Sowohl die Ausgestaltung gemäß den Fign. 4a und 4b als auch die Ausgestaltung gemäß den Fign. 5a bis 5c zeichnet sich durch eine einfache und zuverlässige Anordnung des elektrischen Leiters 40 in der Verkleidung 60, 70 aus. In beiden Fällen wird der elektrische Leiter von Seiten des Rahmens 12 her in die Ausnehmung 61, 74 eingeführt. Dies bietet den Vorteil, daß zum einen in eingebautem Zustand der Verkleidung 60, 70 der elektrische Leiter 40 unlösbar in der Ausnehmung 61, 74 angeordnet ist. Zum anderen wird auf diese Weise die dem Betrachter zugewandte äußere Seite der Verkleidung 60, 70 in optischer Hinsicht nicht durch die Ausnehmungen 61, 74 beeinträchtigt.

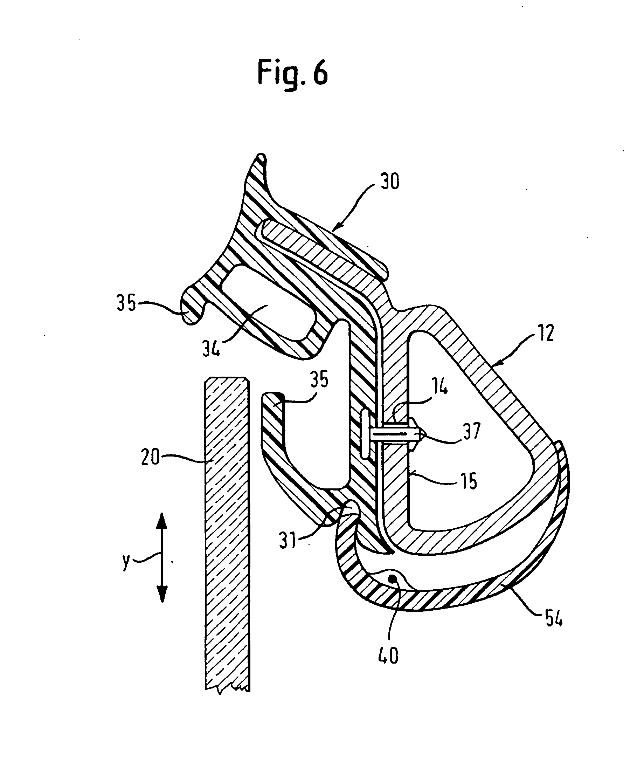

In Fig. 6 ist eine weitere Ausführungsform dargestellt. Im Unterschied zu der Ausgestaltung gemäß Fig. 2 ist das Dichtungsprofil 30 in diesem Fall mittels eines Befestigungsclips 37 an dem Rahmen 12 befestigt. Der mit dem Dichtungsprofil 30 verbundene Befestigungsclip 37 durchragt zu diesem Zweck eine Bohrung 14 des Rahmens 12, um eine dem Dichtungsprofil 30 abgewandte Fläche 15 des Rahmens 12 zu hintergreifen. Der elektrische Leiter 40 ist an einer den Rahmen 12 kaschierenden Verkleidung 54 angeordnet. Der elektrische Leiter 40 kann dabei mit der Verkleidung 54 wie in den Fign. 2 und 3 a bis d gezeigt verbunden sein.

Die zuvor beschriebene Vorrichtung zum Erkennen eines Hindernisses kann nicht nur als Einklemmschutz für die Fensterscheibe 20 Anwendung finden, sondern auch für andere Schließelemente des Kraftfahrzeugs 10, beispielsweise einem Schiebedach, einer Heckklappe oder eines Kofferraumdeckels, eingesetzt werden. Maßgeblich dabei ist, daß eine Zierleiste 50 oder eine andere Art von Verkleidung, an dem der elektrische Leiter 40 befestigt werden kann, sich vorsehen läßt.

### Bezugszeichenliste

- 10: Kraftfahrzeug
- 11: Vordertür
- 12: Rahmen
- 13: Kanal
- 14: Bohrung
- 15: Fläche

- 20: Fensterscheibe
- 21: Elektromotor

- 30: Dichtungsprofil
- 31: Ausnehmung
- 32: Befestigungsabschnitt
- 33: Haltelippe
- 34: Hohlkammer
- 35: Dichtlippe
- 36: leitender Abschnitt
- 37: Befestigungsclip

- 40: elektrischer Leiter
- 41: Ummantelung

- 50: Zierleiste
- 51: Steg
- 52: Vorsprung
- 53: Spalt
- 54: Verkleidung

- 60: elastische Verkleidung
- 61: Ausnehmung
- 62: Spalt

- 70: Verkleidung
- 71: Schenkel
- 72: Schenkel
- 73: Basis
- 74: Ausnehmung
- 75: Steg
- 76: Klebemittel

- w: Biegerichtung
- y: Antriebsrichtung

## Patentansprüche

1. Vorrichtung zum Erkennen eines Hindernisses in dem Öffnungsbereich eines zwischen einer Offenstellung und einer Schließstellung bewegbaren Schließelements eines Kraftfahrzeugs (10) mit
einem ein Hindernis in dem Öffnungsbereich des Schließelements (20) erfassenden Sensor, der wenigstens einen elektrischen Leiter (40), der ein elektrisches Feld in dem Öffnungsbereich des Schließelements (20) erzeugt, aufweist;
einem das Schließelement (20) abdichtenden Dichtungsprofil (30), das aus einem elastischen Werkstoff gefertigt und an einem Rahmen (12) des Kraftfahrzeugs (10) befestigbar ist, und
einer den Rahmen (12) oder das Dichtungsprofil (30) zumindest teilweise verdeckenden Verkleidung (50; 60; 70), die eine dem Rahmen (12) oder dem Dichtungsprofil (30) zugewandte Innenseite aufweist und stationär an dem Kraftfahrzeug (10) befestigbar ist; **dadurch gekennzeichnet, daß**
die Verkleidung (50; 60; 70) mit einer Ausnehmung (51, 52, 53; 61, 62; 74) versehen ist, die zumindest im nicht montierten Zustand der Verkleidung (50; 60; 70) an der Innenseite mündet;
wobei der Leiter (40) in der Ausnehmung (51, 52, 53; 61, 62; 74) angeordnet ist und
wobei die Verkleidung (50; 60; 70) zur elektrischen Isolierung des Leiters (40) aus einem dielektrischen Werkstoff gefertigt ist.

2. Vorrichtung nach Anspruch 1, **dadurch gekennzeichnet, dass** die Verkleidung (50; 60; 70) zum Befestigen des Leiters (40) im Bereich der Ausnehmung (51, 52, 53; 61, 62; 74) elastisch verformbar ist.

3. Vorrichtung nach Anspruch 1 oder 2, **dadurch gekennzeichnet, dass** der Leiter (40) formschlüssig oder kraftschlüssig oder stoffschlüssig in der Ausnehmung (51, 52, 53; 61, 62; 74) gehalten ist.

4. Vorrichtung nach einem der Ansprüche 1 bis 3, **dadurch gekennzeichnet, dass** der Leiter (40) in einer aus einem elastischen, dielektrischen Werkstoff gefertigten Ummantelung (41) eingebettet ist.

5. Vorrichtung nach einem der Ansprüche 1 bis 4, **dadurch gekennzeichnet, dass** der Leiter (40) als Litze oder flaches Band ausgestaltet ist.

6. Vorrichtung nach einem der Ansprüche 1 bis 5 **dadurch gekennzeichnet, dass** die Ausnehmung durch wenigstens zwei Stege (51) gebildet ist, zwischen denen der Leiter (40) festgelegt ist.

7. Vorrichtung nach einem der Ansprüche 1 bis 6, **dadurch gekennzeichnet, dass** die Ausnehmung durch einen Vorsprung (52) gebildet ist, an dem der Leiter (40) einklemmbar ist.

8. Vorrichtung nach einem der Ansprüche 1 bis 7, **dadurch gekennzeichnet, dass** die Ausnehmung durch einen mit einer Hinterschneidung versehenen Spalt (53; 61, 62; 74) gebildet ist, in dem der Leiter (40) festgelegt ist.

9. Vorrichtung nach einem der Ansprüche 1 bis 8, **dadurch gekennzeichnet, dass** die Verkleidung (50) formschlüssig mit dem Dichtungsprofil (30) verbunden ist.

10. Vorrichtung nach Anspruch 9, **dadurch gekennzeichnet, dass** die Verkleidung als sich entlang des Dichtungsprofils (20) erstreckende Zierleiste (50) ausgestaltet ist.

## Claims

1. A device for detecting an obstacle in an opening range of a closure element of a motor vehicle (10) movable between an open position and a closed position , comprising
a sensor for detecting an obstacle in the opening range of the closure element (20), the sensor comprising at least one electrical conductor (40) configured to generate an electric field in the opening range of the closure element (20);
a sealing profile (30) made of an elastomeric material, the sealing profile (30) being configured to seal the closure element (20) and being configured to be fastened to a frame (12) of the motor vehicle (10) and a trim (50; 60; 70) covering at least a portion of the frame (12) and having an inner face facing the frame (12) or the sealing profile (30) and being configured to be statically fastened to the motor vehicle (10)
**characterized in that**
the trim (50; 60; 70) is provided with an opening (51, 52, 53; 61, 62; 74) configured to open out on the inner face at least while unmounted, wherein the conductor (40) is located in the opening (51, 52, 53; 61, 62; 74) and
wherein the trim (50; 60; 70) is made of a dielectric material for electrically isolating the conductor (40).

2. Device according to claim 1, **characterized in that** the trim (50; 60; 70) is elastically deformable in a vicinity of the opening (51, 52, 53; 61, 62; 74) for fixing the conductor (40).

3. Device according to claim 1 or 2, **characterized** that the conductor (40) is held in the opening (51, 52, 53; 61 62; 74) connected to the trim by positive or non-positive locking.

4. The device as set forth in any of the claims 1 to 3, **characterized in that** the conductor (40) is embedded in a sheathing (41) made of an elastomeric dielectric material.

5. The device as set forth in any of the claims 1 to 4, **characterized in that** the conductor (40) comprises a strand or strip.

6. The device as set forth in any of the claims 1 to 5, **characterized in that** the conductor (40) is located between at least two webs (51) defining the opening.

7. The device as set forth in any of the claims 1 to 6, **characterized in that** the conductor (40) may be clamped in place by a protuberance (52) defining the opening.

8. The device as set forth in any of the claims 1 to 7, **characterized by** a gap (53; 61, 62; 74), defining the opening and having an undercut, wherein the conductor (40) is located.

9. The device as set forth in any of the claims 1 to 8, **characterized in that** the trim (50) is connected to the sealing profile (30) by positive locking.

10. The device as set forth in claim 9, **characterized in that** the trim is configured as a trim strip (50) extending along the sealing profile.

## Revendications

1. Dispositif pour reconnaître un obstacle dans la zone d'ouverture d'un élément de fermeture d'un véhicule automobile (10) mobile entre une position ouverte et une position fermée, comprenant
un détecteur détectant un obstacle dans la zone d'ouverture de l'élément de fermeture (20), qui est pourvu d'au moins un conducteur électrique (40) générant un champ électrique dans la zone d'ouverture de l'élément de fermeture (20) ;
un profilé d'étanchéité (30) étanchant l'élément de fermeture (20), qui est fabriqué à partir d'un matériau élastiquement déformable et fixé sur un cadre (12) du véhicule automobile (10) ;
un habillage (50 ; 60 ; 70) recouvrant au moins partiellement le cadre (12) ou le profilé d'étanchéité (30), qui présente une face intérieure tournée vers le cadre (12) ou vers le profilé d'étanchéité (30) et qui peut être fixé de façon stationnaire sur le véhicule automobile (10) ;
**caractérisé en ce que**
l'habillage (50 ; 60 ; 70) est doté d'un évidement (51, 52, 53 ; 61, 62 ; 74) qui débouche au niveau de la face intérieure, au moins dans l'état non monté de l'habillage (50 ; 60 ; 70) ;
le conducteur électrique (40) est agencé dans l'évidement (51, 52, 53 ; 61, 62 ; 74) et
l'habillage (50 ; 60 ; 70) est réalisé en un matériau diélectrique pour l'isolation électrique du conducteur électrique (40).

2. Dispositif selon la revendication 1, **caractérisé en ce que** l'habillage (50 ; 60 ; 70) est élastiquement déformable pour la fixation du conducteur électrique (40) dans la zone de l'évidement (51, 52, 53 ; 61, 62 ; 74).

3. Dispositif selon la revendication 1 ou 2, **caractérisé en ce que** le conducteur électrique (40) est maintenu par coopération de formes ou par coopération de forces ou encore par coopération de matières dans l'évidement (51, 52, 53 ; 61, 62 ; 74).

4. Dispositif selon l'une des revendications 1 à 3, **caractérisé en ce que** le conducteur électrique (40) est noyé dans un enrobage (41) réalisé en un matériau diélectrique élastique.

5. Dispositif selon l'une des revendications 1 à 4, **caractérisé en ce que** le conducteur électrique (40) est réalisé sous forme de toron ou sous forme de bande plate.

6. Dispositif selon l'une des revendications 1 à 5, **caractérisé en ce que** l'évidement est formé par au moins deux barrettes (51) entre lesquelles le conducteur électrique (40) est immobilisé.

7. Dispositif selon l'une des revendications 1 à 6, **caractérisé en ce que** l'évidement est formé par une saillie (52) contre laquelle le conducteur (40) peut être coincé.

8. Dispositif selon l'une des revendications 1 à 7, **caractérisé en ce que** l'évidement est formé par une fente (53 ; 61, 62 ; 74) dotée d'une contre-dépouille, dans laquelle le conducteur (40) est immobilisé.

9. Dispositif selon l'une des revendications 1 à 8, **caractérisé en ce que** l'habillage (50) est relié par coopération de formes au profilé d'étanchéité (30).

10. Dispositif selon la revendication 9, **caractérisé en ce que** l'habillage est réalisé sous la forme d'une baguette enjoliveuse (50) s'étendant le long du profilé d'étanchéité (20).
